Europäisches Patentamt

European Patent Office

Office européen des brevets

(11) Publication number: **0 461 464 A1**

## EUROPEAN PATENT APPLICATION

(21) Application number: 91108700.5

(51) Int. Cl.⁵: **F16F 1/36**

(22) Date of filing: 28.05.91

(30) Priority: 29.05.90 JP 140643/90
29.05.90 JP 140644/90
29.05.90 JP 140646/90

(43) Date of publication of application:
**18.12.91 Bulletin 91/51**

(84) Designated Contracting States:
**DE FR GB IT SE**

(71) Applicant: **BANDO CHEMICAL INDUSTRIES, LIMITED**
2-15, Meiwa-dori 3-chome
Hyogo-ku Kobe-shi(JP)

(72) Inventor: **Wada, Noriaki, c/o Bando Chemical Industries, Ltd.**
2-15, Meiwa-dori 3-chome
Hyogo-ku, Kobe-shi(JP)

Inventor: **Shioyama, Tsutomu, c/o Bando Chemical Ind., Ltd.**
2-15, Meiwa-dori 3-chome
Hyogo-ku, Kobe-shi(JP)
Inventor: **Umeda, Arao, c/o Bando Chemical Industries, Ltd.**
2-15, Meiwa-dori 3-chome
Hyogo-ku, Kobe-shi(JP)
Inventor: **Iwai, Keiji, c/o Bando Chemical Industries, Ltd.**
2-15, Meiwa-dori 3-chome
Hyogo-ku, Kobe-shi(JP)

(74) Representative: **Gauger, Hans-Peter, Dipl.-Ing.**
Müller, Schupfner & Gauger
Maximilianstrasse 6 Postfach 10 11 61
W-8000 München 1(DE)

(54) Vibration-isolating material.

(57) A vibration-isolating material with natural rubber, synthetic rubber or a mixture thereof as material rubber. Short fiber of less than 10mm in length of staple L, more than 40 in L/D (ratio of length of staple L to diameter of fiber D) and more than 40g/d in the initial modulus of elasticity is mixed in material rubber. Also, aramide short fiber of less than 10mm in length of staple L in mixed in material rubber. At least 60 weight % material rubber is natural rubber, isoprene rubber or a mixture thereof.

Fig 3

This invention relates to a vibration-isolating material comprising material rubber in which short fiber is mixed, especially a vibration-isolating material to be used for an automobile.

Description of the prior art

In the automobile, for example, rubber vibration isolators of various shapes and properties are used for each part in order to absorb or reduce various vibrations and noises generated from the engine part, the power transmitting part, the suspension part, etc. for holding each part to its specified position and making each part display its function to the full and also in order to remove disagreeable vibrations and noises for improving comfortableness to ride in. For these rubber vibration isolators, vulcanized rubber composition with natural rubber or natural rubber and diene rubber as material rubber has been chiefly used.

In recent years, there has been a tendency that the engine-room temperature of the automobile rises mainly due to higher output, higher speed and restriction of air flow into the engine-room for reducing air resistance. Therefore, rubber vibration isolators of the engine mount or the like in the engine-room are used under the higher temperature condition than before. In addition, due to the space saving and the increase of parts around the engine, the rubber vibration isolator has been required to be smaller in shape and to bear more load than before. Thus, higher modulus of elasticity, lower kinetic magnification and durability under strict conditions have been required for rubber vibration isolators for the automobile.

As rubber vibration isolators to meet the above requirements, there have been used, for example, rubber vibration isolators comprising natural rubber with which diene system rubber, such as butadiene rubber, is mixed and to which stearic acid, carbon black, vulcanizing agent, vulcanizing accelerater, etc. are added. By increasing the quantity of addition of vulcanizing agent, higher modulus of elasticity and lower kinetic magnification are contemplated. However, the method of increasing the addition of vulcanizing agent not only deteriorates thermal age-resistence and causes the problem of durability, but also increases the vulcanizing speed and worsens molding processability.

In general, rubber vibration isolators to be used for automobiles etc. are not compounded with short fibers but it comes under consideration to use rubber compounded with short fibers from which improvement of spring constant can be expected, instead of rubber itself.

The rubber vibration isolator having short fiber compound rubber as its composing member displays a special vibration-isolating characteristic owing to anisotropy of its spring constant but as compared with the conventional rubber vibration isolator containing no short fiber, it is inferior in durable life. An earnest study of the cause of such inferiority in durable life made by us has revealed that the surface exposed part of short fiber, especially the interface between the exposed surface part of short fiber and rubber and also the interface in the area where density of short fiber is high locally becomes a starting point of rupture. It has also been revealed that due to external environmental factor of water, etc., start of rupture at the interface part is accelerated further. In the rubber compounded with short fiber, existence of the local high density part of short fiber mentioned above is a probably unavoidable task, even if short fiber is dispersed to the highest degree.

The Japanene Patent Application laying Open Gazette No.61-290243 discloses formation of a rubber vibration isolator by combining a fiber reinforced rubber layer (reinforced with compounding of short fiber oriented in one direction) with an non-reinforced rubber layer. This rubber vibration isolator has a fiber reinforced rubber layer exposed at the outer surface and therefore cannot solve the above task.

In order to display anisotropy of spring constant, the method of (1) giving anisotropy by specifying the shape of rubber vibration isolator and the method (2) of laminating metal sheets and rubber layers in plurality and making the spring constant high in vertical direction and low in shearing direction, in relation to the laminated surface, have been adopted widely.

However, according to the method (1), anisotropy is given by specifying the shape but the shape cannot be specified in a wide range due to restriction of installation space, restriction of shape, etc. and also the stress concentration part will be formed by specifying the shape and service life will be shortened due to the stress concentration. According to the method (2), since rubber is compounded with metal members, a manufacturing process is complicated and the problem of interface fatigue is raised. Also, it is practically difficult to reveal three-dimensional anisotropy.

SUMMARY OF THE INVENTION

The present invention has for its object to provide a vibration-isolating material having a moderate vulcanizing speed, from which higher hardness (higher modulus of elasticity) and lower kinetic magnification can be attained at cheap cost and with ease.

2

The present invention plans higher hardness and lower kinetic magnification and also attains vibration-isolatability without impairing durability and processability, by mixing conventional rubber material with short fiber.

The vibration-isolating material according to the present invention comprises material rubber which is natural rubber, synthetic rubber or a mixture thereof in which short fiber of less than 10mm in L (length of staple), more than 40 in L/D (the ratio of length of staple L to diameter of fiber D) and more than 40g/d in the initial modulus of elasticity is mixed. Such short fiber is aramid fiber, for example, Since vibration-isolating material according to the present invention contains short fiber having a much higher modulus of elasticity than rubber, movement of rubber is restricted by such short fiber and higher modulus of elasticity and lower kinetic magnification can be realized at cheap cost and with ease. In addition, as short fiber has absorption of external energy, dynamic loss (loss factor) becomes larger and vibration-isolating characteristic is improved.

The vibration-isolating material according to the present invention comprises material rubber, synthetic rubber or a mixture thereof, in which aramide short fiber of less than 10mm in length of staple L is mixed. In this case, more than 60 weight % of material rubber can be composed by natural rubber, isoprene rubber or a mixture thereof.

In order to obtain anisotropy of high modulus of elasticity (spring constant) and display characteristic vibration-isolatability, it is possible to have the short fiber mentioned above contained in material rubber at 0.5-65% in volumes to determine the coefficient of orientation Hi of such short fiber compounded elastomer by the following formula (1) and to make the coefficient of orientation $H$, in $S_1$ direction 45 - 100%, the coefficient of orientation $H_2$ in $S_2$ direction crossing at a right angle to $S_1$ direction $\{(100 - H_1) \times (500 \sim 100)\}\%$ and the coefficient of orientation $H_3$ in $S_3$ direction crossing at a right angle to $S_1$, $S_2$ directions $\{-(100 - (H_1 + H_2)\}\%$.

$$Hi = \{(1/Vi) / (1/V_1 + 1/V_2 + 1/V_3)\} \times 100 \qquad (1)$$

$i = 1,2,3$
where $V_1$, $V_2$, $V_3$; solvent coefficient of linear expansion in $S_1$, $S_2$, $S_3$ directions.

Instead of using the above-mentioned short fiber, by making short fiber compounded elastomer containing other conventional short fiber at 0.5 - 65 volume % as a composing member or a part of its composing member, by determining the coefficient of orientation Hi of short fiber of the above short fiber compounded elastomer by the above formula (1) and by making the coefficient of orientation $H_1$ in $S_1$ direction 45 - 100%, the coefficient of orientation $H_2$ in $S_2$ direction crossing at a right angle to $S_1$ direction $\{(100 - H_1) \times (50 \sim 100)\}\%$ and the coefficient of orientation $H_3$ in $S_3$ direction crossing at a right angle to $S_1$, $S_2$ directions $\{(100 - (H_1 + H_2)\}\%$, anisotropy of the coefficient of elasticity can also be obtained.

In this case, therefore, short fiber of short fiber compounded elastomer as a composing member is oriented three-dimensionally and anisotropy of the coefficient of elasticity can be obtained. The larger the difference in the coefficient of elasticity between directions, the larger the anisotropy of the coefficient of elasticity.

According to the present invention, by making short fiber compounded elastomer containing 0.5 - 65 volume % short fiber as its composing member or a part of its composing member and by orienting the above short fiber mainly in concentric circle direction in relation to one axis, it is possible to orient short fiber three-dimensionally (the coefficient of elasticity is high in two directions and low in one direction), thereby obtaining anisotropy of the coefficient of elasticity. Besides, it is possible to compose the above composing member by laminating short fiber compounded elastomers of the same kind or different kind (with different orienting direction, different coefficient of orientation or different content of short fiber). Therefore, various kinds of anisotropy can be obtained by combining short fiber compounded elastomer of the same kind or different kind (with different orienting direction, different coefficient of orientation or different content of short fiber). Thus, by combining short fiber compound elastomers of the same kind or different kind (with different orienting direction, different coefficient of orientation, different content of short fiber, etc.), materials having various anisotropy can be obtained and characteristic vibration-isolating ability can be displayed.

Furthermore, by using a metal member as a part of the composing member and by combining with such metal member, anisotropy of the coefficient of elasticity can be improved more.

It is also an object of the present invention to provide a vibration-isolating material of improved durability by making the interface between short fiber and rubber nonexistent at the surface part and thereby ensuring vibration-isolatability.

In the above case, a vibration-isolating material according to the present invention is provided with an inner member comprising short fiber compounded rubber and composing the inside and an outer member comprising rubber containing no short fiber and composing an exposed surface part. As a short fiber compound a elastomer, material rubber comprising natural rubber, synthetic rubber or a mixture thereof in which short fiber of less than 10mm in length of staple L, more than 40 in L/D (the ratio of the length of staple L to the diameter of fiber D) and more than 40g/d in the initial coefficient of elasticity is mixed or material rubber comprising natural rubber, synthetic rubber or a mixture thereof in which aramide short fiber of less than 10mm in length of staple L is mixed and dispersed is used. The coefficient of elasticity of the outer member is made smaller than that of the inner member. In this structure, short fiber is not exposed to the surface part (outer member) and therefore, it can be avoided that the interface between short fiber and rubber which is easy to become a starting point of rupture exists near the surface part where the highest distortion generates and also due to nonexistence of the interface at the surface part, vibration-isolating material is barely affected by external factor and durable life of it is improved. Moreover, vibration-isolating ability can be ensured. If the coefficient of elasticity of the outer member is made smaller than that of the inner member, it acts favorably on the improvement of durable life.

The above and other objects and novel features of the present invention will be understood more clearly by reading the following description with reference to the accompanying drawings.

BRIEF DESCRIPTION OF THE DRAWING

The accompanying drawings show preferred embodiments of the present invention, in which:

Fig. 1 is a perspective view of a square type vibration-isolating test piece used for evaluating various properties of a vibration-isolating material;

Fig. 2 is a perspective view of a test piece of block shape;

Fig. 3 is a graph showing the relation between the short fiber content and 5% compressive stress;

Fig. 4 (a)~(c) are explanatory drawings of the method of manufacturing teat pieces;

Fig. 5 and Fig. 6 are perspective views of other test pieces;

Fig. 7 (a)~(c) are perspective views of still other test pieces;

Fig. 8 is a side view of a test piece; and

Fig. 9 shows the result of a test regarding the relation between the quantity of carbon black and breaking cycle.

DETAILED DESCRIPTION OF THE INVENTION

A description is made below of embodiments of the present invention with reference to the drawings.

Embodiment 1:

The vibration-isolating material according to the present invention comprises conventional rubber material and short fiber mixed therewith and has higher hardness, lower kinetic magnification, moderate durability and good processability.

Material rubber is selected properly from among crosslinking rubbers, such as natural rubber, styrene butadiene rubber, chloroprene rubber, isoprene rubber,ethylen proprene rubber, butyl rubber, acrylonitrile butadien rubber, silicon rubber, urethane rubber, fluoric rubber, halogenated butyl rubber, hydro-NBR, chlorosulfonated polyethylene, and thermoplastic elastomers of polyolefine system, polyester system, polyether system, polyamide system, polyurethane system, etc. Reinforcing agents, such as carbon black, and inorganic fillers, such as silica, calcium carbonate, talc, clay, etc., can be selected properly.

In the above vibration-isolating material, extender oil for rubber, chemicals for rubber and additives for rubber are compounded, where necessary. Extender oil for rubber of aromatic system, naphthene system or paraffin system is preferable for use. As to chemicals for rubber and additives for rubber, crosslinking agent (such as sulphur, peroxide, etc.), vulcanizing accelerating assistant (such as sulphur, peroxide, etc.), vulcanizing accelerating assistant (such as zinc oxide, stearic acid, etc.), vulcanizing accelerater (such as sulfonamide system, thiuram system, thiazole system, guanidine system, etc.), age-resister (such as amine system, phenol system, sulphur system, phosphorus system, etc.), ozone deterioration resister, tackifiber, plasticizer, etc. are used according to the purpose of using vibration-isolating material.

As to short fiber, such short fiber which is less than 10mm in length of staple L, more than 40 in L/D (the ratio of length of staple L to diameter of fiber D) and more than 40g/d in the initial coefficient of elasticity is used. Short fiber of more than 40g/d in the initial modulus of elasticity is selected properly from among para-aramide fiber (Du Pont's NOMEX, Teijin's TECHNORA, for example), aromatic fiber (such as Kuraray's VECTRAN), synthetic fiber, natural fiber or semi-systhetic fiber (such as vinylon, polyester, polyproplene, nylon 6, nylon 6,6, cotton, Monsanto's SANTOWEB, etc.), cellulose fiber, inorganic fiber, such as glass fiber, carbon fiber, ceramic fiber, Ubekosan's TYRANNO fiber, Baron, and metallic fiber of steel, stainless steel, copper, etc.

From the standpoint of higher coefficient of elasticity, it is desirable to use short fiber which is high in the initial modulus of elasticity. L/D (the ratio of length of staple L to diameter of fiber D) should preferably be large. It is desirable that the length of stale L is long but if it exceeds 10mm, processability is impaired and therefore it should be 10mm or less. Is has been confirmed that short fiber whose L/D (the ratio of length of staple L to diameter of fiber D) is less than 40 or whose initial modulus of elasticity is less than 40g/d is not much effective for the purpose of higher hardness (higher modulus of elasticity) and lower kinetic magnification.

It is desirable to use short fiber showing high modulus of elasticity of fiber itself and less reduction of L/D caused by breaking of fiber during mix kneading, for example, para-amide fiber or meta-aramide fiber. However, it is not necessarily so limited.

As to material rubber, from the viewpoints of cost reduction and vibration-isolating property, use of material rubber or isoprene rubber in more than 60 weight% is desirable but it is not necessarily so limited.

Quantity of short fiber to be mixed is not particularly limited but for improving modulus of elasticity and ensuring processability, 3 - 30 volume % is desirable.

In the above-mentioned composition, by mixing short fiber having higher modulus of elasticity than rubber itself in material rubber, movement of rubber is restricted and accordingly higher modulus of elasticity and lower kinetic magnification can be realized. Since short fiber has absorption of external energy, dynamic loss (loss factor) becomes large by mixing short fiber and as a result, vibration-isolating characteristic is improved. Also, such defects as (1) fast vulcanizing speed and bad processability and (2) reduction of thermal age-resistance and bad durability which are caused by the conventional method of increasing the vulcanizing agent are eliminated.

An explanation is made below about the test carried out for capacity of the vibration-isolating material mentioned above.

Mix kneading was carried out at the mixing ratio (weight ratio) shown in Table 1. A mixture was rolled by rollers and was vulcanized. After vulcanization, the mixture was measured for vulcanization characteristic, vibration characteristic and thermal age-resistence. The results are shown in Table 2.

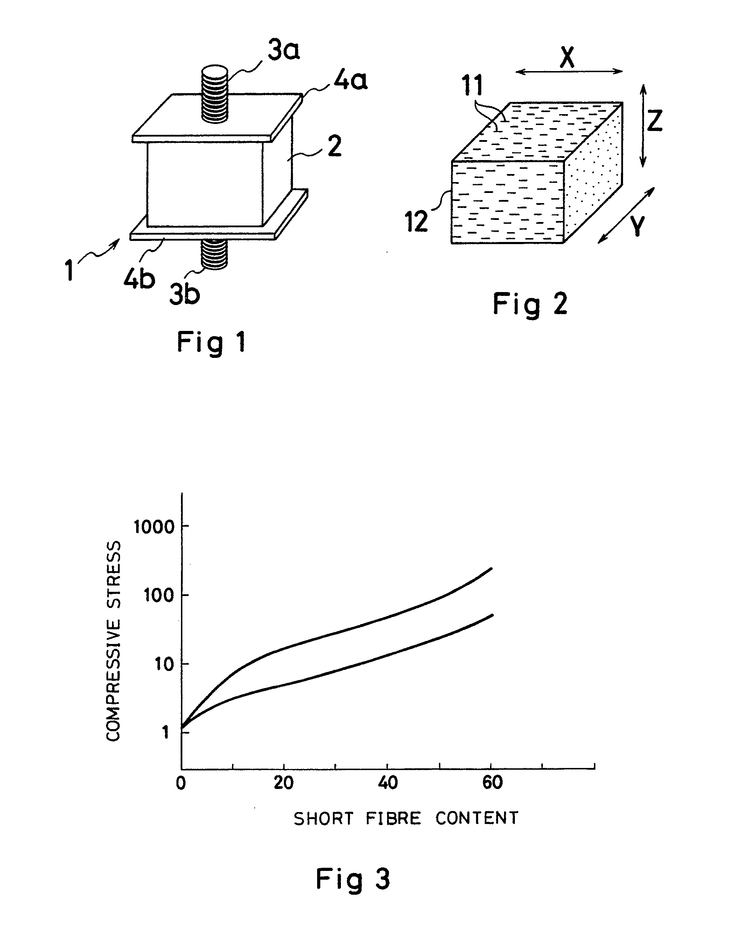

Vulcanization characteristic was measured at the measuring temperature of $150°C$ by using Monsanto's leometer. A test piece of square vibration-isolating material (cubic shape, one side 50mm) as shown in Fig. 1 was measured for vibration characteristic. Static spring constant was measured between 2-4mm in compressing direction. Kinetic spring constant was measured under 3mm compression ±1mm at 10HZ and under 3mm compression ±0.05mm at 100HZ. The vibration-isolating material test piece 1 comprises rubber part 2 of cubic shape and flanges 4a, 4b with screw rods 3a, 3b fixed at the upper part and the lower part.

## Table 1

| | Example of the present invention | | Comparative example | |
|---|---|---|---|---|
| | 1 | 2 | 1 | 2 |
| Natural rubber | 80 | 80 | 80 | 80 |
| Butadiene rubber | 20 | 20 | 20 | 20 |
| Carbon black (N550) | 25 | 25 | 25 | 25 |
| Zinc oxide | 3 | 3 | 3 | 3 |
| Stearic acid | 1 | 1 | 1 | 1 |
| Softening agent | 5 | 5 | 5 | 5 |
| Age-resister | 2 | 2 | 2 | 2 |
| Vulcanizing accelerater CBS | 2 | 2 | 2 | 2 |
| Vulcanizing accelerater TMTD | 0.5 | 0.5 | 0.5 | 0.5 |
| Sulphur | 1.5 | 1.5 | 1.5 | 1.5 |
| Meta-aramide fiber    (length 3mm     dia. 14) | 10 | — | — | — |
| Nylon 6, 6 fiber    (length 3mm     dia. 27) | — | 10 | — | — |

## Table 2

| | Example of the present invention | | Comparative example | |
|---|---|---|---|---|
| | 1 | 2 | 1 | 2 |
| Vulcanization charasteristic Leometer $t_{10}$ (min.) 150 C° | 11.8 | 12.7 | 12.5 | 2.7 |
| Vibration characteristic | | | | |
| Static spring constant (Kg/mm) | 77 | 62 | 31 | 42 |
| Loss factor at 10Hz | 0.061 | 0.068 | 0.053 | 0.040 |
| Kinetic spring constant (100Hz) | 85 | 71 | 40 | 50 |
| Kinetic spring constant /static spring constant | 1.10 | 1.13 | 1.29 | 1.19 |
| Thermal age-resistance | | | | |
| Hardness before ageing (JISA) | 57 | 55 | 49 | 56 |
| Hardness after 80 C° × 7 days (JISA) | 61 | 60 | 54 | 66 |

The above test results have confirmed that as compared with comparative examples, examples of the present invention show a higher modulus of elasticity (spring contant), a smaller kinetic magnification and a larger loss factor. Also, comparative sample 2 shows (1) shorter $T_{10}$ and bad processability and (2) larger rise of hardness at thermal ageing and worse thermal age-resistance than comparative sample 1, but such phenomena is not found in examples of the present invention.

Embodiment 2:

The vibration-isolating material according to the present invention is formed in optional shape. It is so formed that it has an anisotropic spring constant (modulus of elasticity) by using short fiber compound elastomer comprising elastic base material (elastomer) in which short fiber is mixed and dispersed at 0.5 - 65 volume % as its composing member or a part of its component member. The reason why the mixing quantity of short fiber is set at 0.5 - 65 volume % is that if it is less than 0.5 volume %, anisotropy of ample modulus of elasticity cannot be obtained and if it exceeds 65 volume %, molding process becomes difficult.

The orientation of short fiber of short fiber compound elatomer can be carried out by the conventional calender, extrusion molding, injection molding, etc. but as a composing member or a part of the composing member of vibration-isolating material having an anisotropical spring constant, the orientation of short fiber should be such that in the case where the coefficient of orientation $H_i$ is defined by

$$H_i = \{(1/V_i) / (1/V_1 + 1/V_2 + 1/V_3 )\} \times 100,$$

i = 1, 2, 3

where $V_1$ , $V_2$ , $V_3$ :   Solvent coefficient of linear expansion in $S_1$, $S_2$, $S_3$ directions (coefficient of linear expansion when material was soaked in solvent and reached equilibrium swelling)

it is effective that the coefficient of orientation $H_1$ in $S_1$ direction is 45 - 100%, the coefficient of orientation $H_2$ in $S_2$ direction crossing at a right angle to $S_1$ direction is $\{(100 - H_1 ) \times (50 \sim 100)\}$%, and the coefficient of orientation $H_3$ in $H_3$ direction crossing at a right angle to $S_1$, $S_2$ directions is $\{100 - (H_1 + H_2)\}$%.

In the vibraiton-isolating material of the above structure, the orienting state of short fiber is set by the fairly high degree of freedom and different moduli of elasticity in three-dimensional or two-dimensional direction are obtained.

Elastomer comprising the above elastic base material is selected properly from among crosslinking type elastomers, such as natural rubber, styrene butadiene rubber, chloroprene rubber, acrylonitrile butadiene rubber, ethylene proprene rubber, urehtane rubber, etc. and thermoplastic elastomers of polyolefine system, polyester system, polyether system, polyamide system, polyurethane system, etc., general additives to elastomers, such as reinforcing agent, fillers, softening agent, crosslinking agent, crosslinking accelerater, crosslinking accelerating assistant, age-resister, tackifier, antistatic agent, keading in addhesives, etc. can be selected optionally.

Short fiber is selected properly from among synthetic fiber, natural fiber and semi-synthetic fiber, such as aliphatic polyamide, aromatic polyamide, polyester, acryl, acetylated polyvinyl alcohol, cotton, silk, wool, pulp, rayon, etc. and metallic fiber of steel, stainless steel, copper, etc. Where necessary, fiber surface is treated for adhesion with addhesives of epoxi system, isocyanate system, resorine system, formalin system, latex (RFL) system, chlorinated rubber system, etc.

The shape of short fiber is optional but if L/D (the ratio of length of staple L to diameter of fiber D) is too large, dispersion of fiber into elastomer is difficult and if it is too small, effect on imparting anisotropy of modulus of elasticity becomes small. From this viewpoint, L/D should be within the range of 10 ~ 1,000 and the length of staple L should be less than 50mm. Desirably, short fiber of less than 10mm in L (length of staple), more than 40 in L/D (the ratio of length of staple L to diameter of fiber D) and more than 40g/d in the initial modulus of elasticity (for example, aramide short fiber of 10mm in length of staple) should be used.

By combining the short fiber compound elastomer having an anisotropic spring constant with the elastomer containing no short fiber as a part of the composing member of vibration-isolating material, function and service life of vibration-isolating material can be improved. For example, in the pillar-shaped vibration-isolating material with short fiber compound elastomer and elastomer containing no short fiber laminated in alternation, it is possible to set the ratio of compressive spring constant to shearing spring constant higher than the vibration-isolating material of the same shape comprising solely short fiber compound elastomer. Also, by using elastomer containing no short fiber at the part where cracks are easy to occur, it is possible to improve service life. It is also possible to form such vibration-isolating material which has different spring constants in axial direction and the direction crossing at a right angle to said axial direction by making short fiber assume the compound form in which fiber is oriented in concentric circle direction in relation to one axis.

From the foregoing, it can be said that by combining various members which are different in kind, content, orienting direction, coefficient of orientation, etc. of short-fiber, vibration-isolating metal having the required anisotropy of spring constant can be manufactured. Also, it is possible to improve anisotropy by combining short fiber compound elastomer with a metallic member or a plastic member.

An explanation is made below about the property test carried out for the above vibration-isolating

material.

## Table 3

| | |
|---|---|
| Natural rubber | 100 PHR |
| FEF Carbon | 25 |
| Softening oil | 5 |
| Age-resister | 2 |
| Stearic acid | 1 |
| Zinc oxide | 3 |
| Vulcanizing accelerater CBS | 2 |
| Vulcanizing accelerater TMTD | 0.5 |
| Sulphur | 1 |

Items given in the above Table 3 were intermixed by an airtight type mix-kneading machine and meta-polyamide fiber cut in length of 3mm was further mixed. A mixture thus obtained was rolled by rollers, was made uniform in grain direction, was laminated and was vulcanized by a press. After vulcanization, a cube (one side 15mm) was cut out of a vulcanized block along the grain direction and thus a sample 12 of block shape (short fibers 11 are oriented three-dimensionally as shown in Fig. 2) was obtained. The relation between 5% compressive stress and content of short fiber in X, Y, Z directions of the sample 12 is shown in Fig. 3.

From Fig. 3, it can be seen that ratio of modulus of elasticity in X direction to modulus of elasticity in Y, Z directions is 5 : 1 at the largest, showing anisotropy.

Apart from the above, nylon 6,6 cut in length of 3mm was mixed at 15 volume %. to the mixture of items shown in Table 3 and according to the method manufacturing mentioned in Japanese Patent Application Laying Open Gazette No. 58-29231, for example, three kinds of extrusion sheet of different coefficient of orientation in three-dimensional direction were manufactureed by varying the diameter of die duct and coefficient of expansion. Similarly to the above case, cubes (one side 15mm) were cut out of a vulcanized block (a mixture was laminated in uniform extruding direction and vulcanized) and thus samples of block shape were obtained. These samples were measured for coefficient of orientation of short fiber and 5% compressive stress, each in X direction (extruding direction), Y direction (width direction) and Z direction (thickness direction), and also dynamic loss (tan $\delta$) in Z direction.

The results are show in Table 4.

# Table 4

|  | Comparative example | | Example of the present invention | | |
|---|---|---|---|---|---|
|  | 1 | 2 | 1 | 2 | 3 |
| Quantity of fiber | 0 | 15 |  | 15 |  |
| Coefficient of orientation of fiber (%) in X direction | – | 29 | 12 | 10 | 3 |
| Y direction | – | 33 | 37 | 21 | 15 |
| Z direction | – | 38 | 51 | 69 | 82 |
| 5% Compressive stress in X direction | 1.6 | 5.1 | 3.4 | 2.8 | 2.4 |
| Y direction | 1.6 | 5.9 | 6.1 | 4.4 | 3.8 |
| z direction | 1.6 | 6.7 | 8.9 | 9.4 | 11.2 |
| tan $\delta$ | 0.09 | 0.12 | 0.14 | 0.18 | 0.19 |

From Table 4, it can be seen that in the case of Comparative Example 2 showing 30% coefficient of orientation of fiber in Z direction, no large difference is found in modulus of compressive elasticity among X, Y and Z directions but in the case of the examples of the present invention showing 51% or higher coefficient of orientation of fiber, the larger the difference in coefficient of orientation among three directions, the larger the anisotropy of modulus of elasticity. Also, it can be guessted that the higher the coefficient of orientation in Z direction, the larger the tan $\delta$ at compressive deformation in Z direction and the larger the contribution to energy elasticity by fiber.

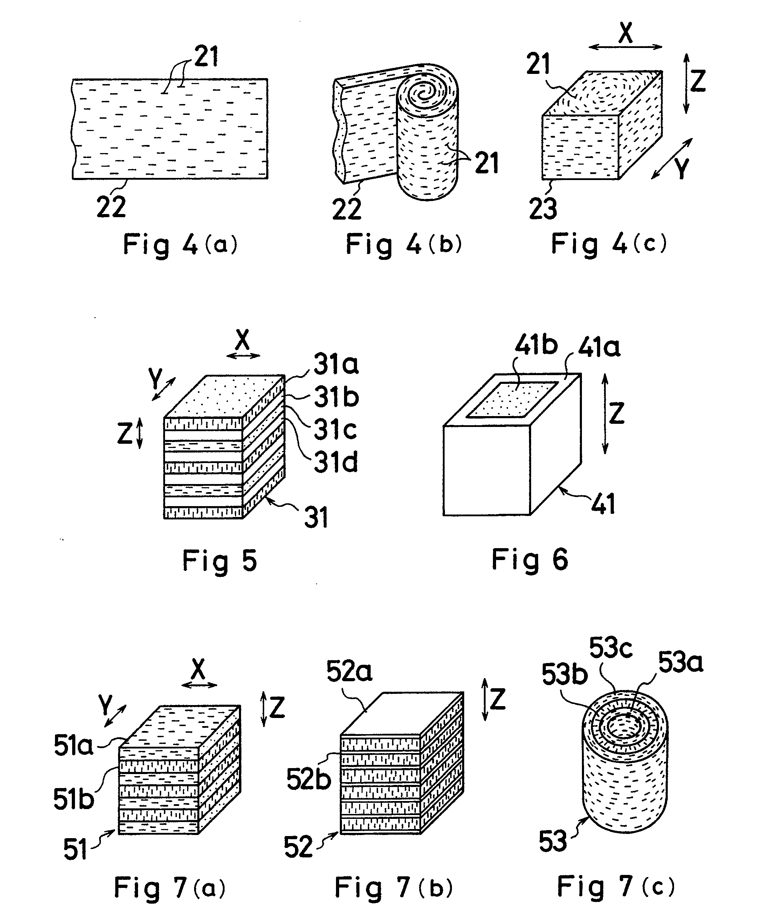

Also, nylon 6,6 cut in average length of 3mm was mixed at 15 volume % in a mixture of items shown in Table 3. This mixture was passed through calender rollers and was made into a sheet 22 of 1mm in thickness in which short fibers 21 are oriented in lengthwise direction as shown in Fig. 4 (a). This sheet 22 was rolled in lengthwise direction into a cylindrical shape as shown in Fig. 4 (b) and was vulcanized and pressed in that state. A cube (one side 15mm) was cut out of a vulcanized block and thus a sample 23 of block shape was obtained and measured in the same way as mentioned before.

The results are shown in Table 5.

## Table 5

| Coefficient of orientation | | |
|---|---|---|
| of fiber (%) | in X direction | 47 |
| | in Y direction | 47 |
| | in Z direction | 6 |
| 5% compressive stress | in X direction | 8.7 |
| (kg) | in Y direction | 8.7 |
| | in Z direction | 2.5 |
| tan $\delta$ | in X direction | 0.20 |
| | in Y direction | 0.20 |
| | in Z direction | 0.18 |

From Table 5, it can be seen that the coefficient of orientation is high in two directions and low in one direction, showing anisotropy.

Sample 31 which is laminate shown in Fig. 5 was made by laminating Examples 1, 2 (unvulcanized sheets) and Comparative Example 1 (unvulcanized sheet) shown in Table in alternation and then pressing and vulcanizing them. The Sample 31 is a laminate having a layer 31a in which short fiber is oriented in Z direction, a layer 31b in which no short fiber is mixed, a layer 31c in which short fiber is oriented in X direction and a layer 31d in which no short fiber is mixed in order from the upside and in repetition. In relation to a sample of the same shape in which short fiber is not mixed at all, the Sample 31 shows about 3.1 times in modulus of compressive elasticity in Z direction, about 1.8 times in modulus of shearing elasticity in X direction and about 1.4 times in modulus of shearing elasticity in Y direction. Thus, the Sample 31 is vibration-isolating material having anisotropy which is tough in Z direction (compressing direction) but pliable in shearing direction (X, Y directions).

By the same method, Sample 41 having short fiber compound rubber 41a covered with rubber 41b containing no short fiber was made. This sample 41 showed service life about 3 times longer than short fiber compound itself of the same shape at the compressive fatigue teat in 6 ± 3% Z direction (430,000 times as against 140,000 times).

Fig. 7(a) shows a Sample 51 with a layer 51a in which short fiber is oriented in Z direction and a layer 51b in which short fiber is oriented in X direction are laminated alternately. Fig. 7(b) shows a Sample 52 with a rubber layer 52a in which short fiber is oriented in Z direction and a metal sheet 52b are laminated altenately. Fig. 7(c) shows a Sample 53 which comprises a central layer 53a of cylindrical shape in which short fiber is oriented in circumferential direction, an intermediate layer 53b which is arranged outside the central layer 53a and in which short fiber is oriented in radial direction and an outer layer 53c which is arranged outside the intermediate layer 53b and in which short fiber is oriented in circumferential direction. All of these samples showed anisotropy of different modulus of elasticity, as compared with corresponding samples comprising rubber containing no short fiber or short fiber compound rubber itself.

In the above embodiments, each sample shows anisotropy of high modulus of elasticity and high tan $\delta$ in a deformation mode where bending occurs in fiber, functioning effectively as vibration-isolating material having anisotropic spring constant.

The present invention is not limited to the above embodiments and has numberless variations.

Embodiment 3:

Vibration-isolating material according to the present invention comprises short fiber compound rubber and its inner member composing the inside is covered with its outer member comprising rubber containing no short fiber and composing the outside. The exposed outer surface is formed with the outer member composed by rubber containing no short fiber.

Rubber material for the inner member and the outer member is selected optionally from among natural rubber, systhetic rubber, such as chloroprene rubber, acrylonitrile butadiene rubber, isobutylene isoprene rubber, styrene butadien rubber, butadiene rubber, fluoric rubber, etc., blendeds thereof, in which reinforcing agent, fillers, softening agent, age-resister, vulcanizing accelerater, vulcanizing agent, etc. are mixed.

Short fiber of the inner member is selected, accoding to characteristics required, from among natural fiber, such as cotton, wool, hemp, etc., semi-synthetic fiber, such as rayon, etc., organic synthetic fiber, such as nylon, polyester, acryl, vinylon, aramide, etc., inorganic fiber, such as silicon oxide, carbon, glass, silicon nitride, etc. metallic fiber, such as steel, stainless steel, amorphous, aluminium, nickel, etc. for combination. Desirably, similarly to the case of Embodiment 1, short fiber of less than 10mm in length of staple L, more than 40 in L/D (the ratio of length of staple L to diameter of fiber D) and more than 40g/d in the initial modulus of elasticity should be used, for example, aramide short fiber of less than 10mm in length of staple.

The quantity of fiber to be compounded and the form of orientation for the inner member are selected optionally as occasion demands. Combination of different kinds of rubber which generates interfacial bond may be used, where necessary. For the use in which weatherproofness is required, for example, the outer member comprising chloroprene rubber itself containing no short fiber can be used for the inner member comprising short fiber compound rubber with natural rubber as matrix rubber.

The following methods are available for manufacturing the above vibration-isolating material.

(1) Method of sticking an unvulcanized cover rubber sheet containing no short fiber on the surface (to be vulcanized) of unvulcanized short fiber compound rubber, followed by vulcanization.

(2) Method of monobloc molding by two-color extrusion and vulcanizing to such form that the cut surface of an extrusion does not become an exposed surface (becomes the surface of adhesion to a metallic member, for example).

(3) Method of arranging unvulcanized short fiber compound rubber in such a state that a slight gap is left between it and the surface of a metallic mold in the direction corresponding to the exposed surface and then fluid molding a matrix rubber layer of high fludity on the surface at vulcanizing.

(4) Method of coating unvulcanized cover rubber on the surface (to be vulcanized) of short fiber compound rubber, followed by vulcanization.

An explanation is made below about tests carried out for the above vibration-isolating material.

Test 1

A block for vulcanization with the coefficient of orientation of short fiber 78% in X direction, 16% in Y direction and 6% in Z direction was made. Then, two kinds of cylindrical body (inner member) with the height direction either in X direction or in Y direction were made. A sheet of 0.3mm in thickness (outer member) made of mixture of compounding A in Table 6, added with 50 parts of carbon block, was stuck on the side surface of the cylindrical body and then vulcanization was carried out. Thus, samples were made.

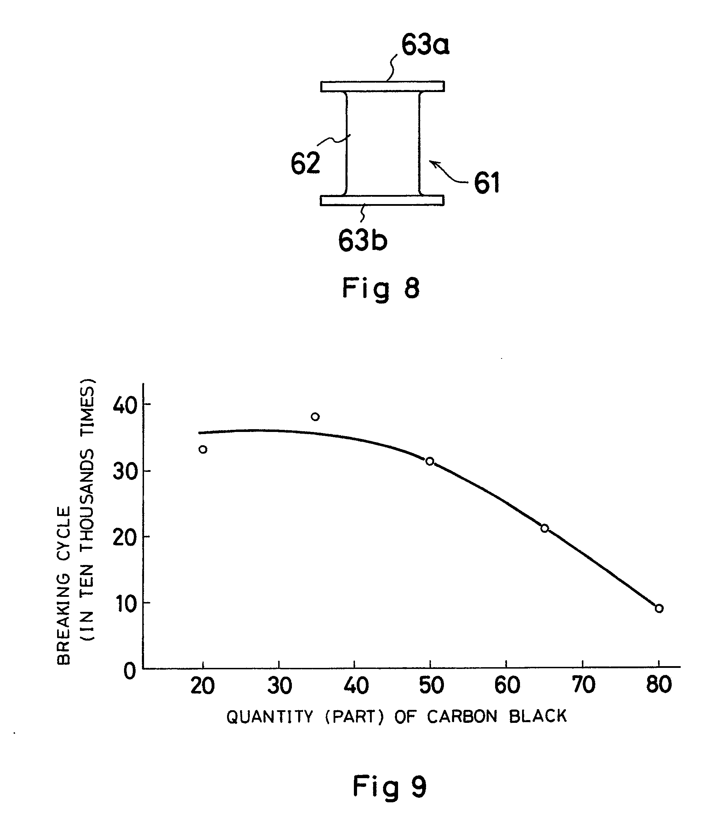

As shown in Fig. 8, a sample 61 comprises a rubber part 62 and rectangular flanges 63a, 63b fixed to both end surfaces of the rubber part 62. As a comparative example, a sample which is the same in shape as the sample 61 but is different in that it has a rubber part with short fiber exposed at the surface was made.

Then, a static load 15 Kg and kinetic load ±7.5 Kg were applied to each of the above samples in axial direction (in the direction of height of the cylindrical body) and the cycle until the sample ruptures was measured. Also, the same measuring was carried out on each sample after wet thermal ageing for 72 hours at 60°C and RH 95%. The results are shown in Table 7.

Test 2

A cylindrical body (inner member) whose diameter is slightly smaller than the cavity diameter of the metallic mold and whose X direction is the height direction was cut out of the block for vulcanization made at Test 1. Vulcanization was carried out on the cylindrical body, with a microscopic gap left between the outer circumferential surface of the cylindrical body and the inner surface of the metallic mold and thus a sample was made. This sample is the same as the sample of Test 1 and no short fiber is observed on its surface.

The same measuring as in the case of Test 1 was carried out for the above sample. The results are shown in Table 7.

Test 3

A sample which is the same in shape as the sample of Test 1, with X direction as its height direction, was made by the same method as in the case of Test 1 (quantity of carbon black was changed within the range of 20 - 80 parts in compounding A in Table 6) and the same measuribg as in the case of Test 1 was carried out for the sample. The results are shown in Fig. 9.

## Table 6

| | Compounding | |
|---|---|---|
| | A | B |
| NR | 100 | 100 |
| N330 carbon black | Variable | 50 |
| Softening agent | 3 | 3 |
| Stearic acid | 2 | 2 |
| Zinc oxide | 5 | 5 |
| Age-resister | 2 | 2 |
| Ozone deterrioration-resister | 1 | 1 |
| Vulcanizing accelerater CBS | 0 | 0.8 |
| Sulphur | 2.5 | 2.5 |
| Kbler (length 3mm) (made by Du Pont) | − | 30 |

## Table 7

| | Test 1 | | | | Test 2 |
|---|---|---|---|---|---|
| | Example of the present invention | | Comparative example | | |
| | 1 | 2 | 1 | 2 | |
| Orienting direction (height) | X | Y | X | Y | X |
| Outer member | Exist | Exist | Nil | Nil | Exist |
| Breaking cycle (in 10,000 times) Original | 32 | 15 | 3.4 | 1.1 | 27 |
| After wet thermal ageing | 29 | 13 | 1.9 | 0.7 | 21 |

From Table 7, it can be seen that the durable life is improved to a great degree by providing an outer member containing no short fiber at the surface. While the comparative example shows great decline in durable life due to wet thermal ageing, the exapmle of the present invention does not show such decline.

Fig. 9 indicates that in the range where the quantity of carbon black of the outer member is less than that of the inner member (namely, in the range where the modulus of elasticity of rubber of the outer member is lower than that of the inner member), durable life is prolonged and more effect is produced.

As the present invention can be embodied in various forms, without departing from its substantial characteristics, the above embodiments have been given solely for explanation purposes and are not of restrictive nature. Furthermore, as the scope of present invention is not limited by the description made preceding the claim for patent but is limited by the scope of claim for patent and equivalents to such requirements are included in the scope of claim for patent.

## Claims

1. A vibration-isolating material comprising material rubber in which short fiber is mixed and dispersed, said material rubber comprising material rubber, synthetic rubber or a mixture thereof and said short fiber being less than 10mm in avarage length of staple L, more than 40 in L/D (ratio of length of staple L to diameter of fiber D) and more than 40g/d in the initial modulus of elasticity.

2. A vibration-isolating material as defined in Claim 1, wherein short fiber is aramide short fiber.

3. A vibration-isolating material comprising material rubber in which short fiber is mixed and dispersed, said material rubber comprising material rubber, synthetic rubber or a mixture thereof and said short fiber being aramide short fiber and less than 10mm in avarage length of staple L.

4. A vibration-isolating material as defined in Claim 3, wherein at least 60 weight % of material rubber is natural rubber, isoprene rubber or a mixture thereof.

5. A vibration-isolating material as defined in Claim 1 or Claim 3, wherein short fiber is mixed and dispersed in material rubber at 0.5 ~ 65 volume %, coefficient of orientation $H_i$ is determined by the following formula and coefficient of orientation $H_1$ in $S_1$ direction is 45 ~ 100%, coefficient of orientation $H_2$ in $S_2$ direction crossing at a right angle to $S_1$ direction is $\{(100 - H_1 ) \times (50 ~ 100)\}\%$ and coefficient of orientation $H_3$ in $S_3$ direction crossing at a right angle to $S_1$, $S_2$ directions is $\{100 - (H_1 + H_2)\}\%$

$$H_i = \{(1/V_i) / (1/V_1 + 1/V_2 + 1/V_3 )\} \times 100$$

$i = 1, 2, 3$
where $V_1$, $V_2$, $V_3$;   Solvent coefficient of linear expansion in $S_1$, $S_2$, $S_3$ directions

6. A vibration-isolating material having short fiber compound elastomer containing short fiber at 0.5 ~ 65 volume % as its composing member or as a part of its composing member, coefficient of orientation $H_i$ of short fiber of said short fiber compound elastomer being determined by the following formula and coefficient of orientation $H_1$ in $S_1$ direction being 45 ~ 100%, coefficient of orientation $H_2$ in $S_2$ direction crossing at a right angle to $S_1$ direction being $\{(100 - H_1 ) \times (50 ~ 100)\}\%$

$$H_i = \{(1/V_i) / (1/V_1 + 1/V_2 + 1/V_3 )\} \times 100$$

$i = 1, 2, 3$
where $V_1$, $V_2$, $V_3$;   Solvent coefficient of linear expansion in $S_1$ , $S_2$, $S_3$ directions

7. A vibration-isolating material having short fiber compound elastomer containing 0.5 ~ 65 volume % as its composing member or as a part of its composing member, short fiber of said short fiber compound elastomer being mainly oriented in concentric circle direction in relation to one axis.

8. A vibration-isolating material having short fiber compound elastomer containing short fiber at 0.5 ~ 65 volume % as its composing member or as a part of its composing member, said composing member being composed by laminating short fiber compound elastomers of the same kind or different kinds having different orienting direction, different coefficients of orientation and different contents of short fiber.

9. A vibration-isolating material as defined in Claim 6, Claim 7 or Claim 8, wherein a metallic member is used as a part of the composing member.

10. A vibration-isolating material having an outer member which composes the surface at the outside of an inner member, said inner member comprising short fiber compound elastomer and said outer member comprising elastomer containing no short fiber.

11. A vibration-isolating material as defined in Claim 10, wherein short fiber compound elastomer comprises natural rubber, synthetic rubber or a mixture thereof in which short fiber of less than 10mm in avarage length of staple, more than 40 in L/D (ratio of length of staple L to diameter of fiber D) and more than 40g/d in the initial modulus of elasticity is mixed and dispersed.

**12.** A vibration-isolating material as defined in Claim 10, wherein short fiber compound elastomer comprises natural rubber, synthetic rubber or a mixture thereof in which aramide short fiber of less than 10mm in avarage length of staple L is mixed and dispersed.

**13.** A vibration-isolating material as defined in Claim 10, wherein modulus of elasticity of rubber of the outer member is smaller than that of the inner member.

Fig 1

Fig 2

Fig 3

Fig 4(a)

Fig 4(b)

Fig 4(c)

Fig 5

Fig 6

Fig 7(a)

Fig 7(b)

Fig 7(c)

Fig 8

Fig 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | PATENT ABSTRACTS OF JAPAN, vol. 11, no. 158 (M-591)[2605], 22nd May 1987; & JP-A-61 290 243 (HONDA MOTOR CO.) 20-12-1986 * Whole abstract * | 10 | F 16 F 1/36 |
| D,A | IDEM | 1,3,7,13 | |
| A | DE-A-3 021 676 (FORD-WERKE AG) * Page 6, line 18 - page 7, line 17; figures 1,3; claims 1-4 * | 1-4,10,11 | |
| A | DATABASE WPI, accession no. 80-19120C, Derwent Publications Ltd, London, GB; & JP-A-55 014 230 (SONY CORP.) * Whole abstract * | 1,3,4,10, 11 | |
| A | DATABASE WPI, accession no. 76-21734X, Derwent Publications Ltd, London, GB; & JP-A-51 014 945 (BRIDGESTONE TIRE) * Whole abstract * | 1,10,11 | |
| A | PATENT ABSTRACTS OF JAPAN, vol. 13, no. 205 (C-595)[3553], 15th May 1989; & JP-A-1 022 941 (YOSHIO ONO) 25-01-1989 * Whole abstract * | 1,2,3,10, 12 | TECHNICAL FIELDS SEARCHED (Int. Cl.5) F 16 F |
| A | PATENT ABSTRACTS OF JAPAN, vol. 13, no. 130 (M-808)[3478], 30th March 1989; & JP-A-63 297 835 (HONDA MOTOR CO.) 05-12-1988 * Whole abstraot * | 1,3,7 | |
| A | US-A-3 058 738 (W.G. CORSON) * Column 2, line 57 - column 3, line 10; figure 3 * | 10 | |

The present search report has been drawn up for all claims

| Place of search | Date of completion of search | Examiner |
|---|---|---|
| The Hague | 16 September 91 | TSITSILONIS L. |